# EUROPEAN PATENT SPECIFICATION

(11) **EP 1 138 389 B1**
(45) Date of publication and mention of the grant of the patent: **15.06.2005**
(21) Application number: 01302342.9
(22) Date of filing: 14.03.2001
(51) Int. Cl.: B01J 35/04

(54) **Ceramic honeycomb structure**
Keramische Wabenstruktur
Structure céramique en nid d'abeilles

(30) Priority: 14.03.2000 JP 2000070250
(43) Date of publication of application: 04.10.2001
(73) Proprietor: NGK INSULATORS, LTD., Nagoya-City, Aichi Prefecture 467-8530 (JP)
(72) Inventor: Ikeshima, Koichi, c/o NGK Insulators Ltd, Nagoya-city, Aichi-Pref 467-8530 (JP)
(74) Representative: Paget, Hugh Charles Edward

(56) References cited:
- EP-A- 0 554 104
- EP-A- 0 798 042
- EP-A- 1 063 396

## Description

### Background of the Invention and Related Art Statement

The present invention relates to a ceramic honeycomb structure having a processed outer circumference. In particular, the present invention relates to a ceramic honeycomb structure with a reinforced outer circumferential wall, which does not hinder a gas flow through partition walls in an outer circumferential portion of the ceramic honeycomb structure, and whose thermal shock resistance is enhanced.

A ceramic honeycomb structure is broadly used as a substrate of a catalyst for purifying automobile exhaust gas because of its light weight and small resistance upon gas passage. About a shape of a cell, a square cell is employed because of easiness of production of a die for forming and high mechanical strength. As a material, a cordierite material whose thermal shock resistance becomes high because of its small thermal expansion coefficient is generally employed. In addition, as a forming method, the extrusion forming is employed generally because mass production is possible with the method. In recent years, high performance of a catalyst has been expected due to the necessity of improving purification performance of automobile exhaust gas, and production of a ceramic honeycomb structure having light weight and high surface area has been expected.

However, it is generally difficult to produce the ceramic honeycomb structure having a thickness of a partition wall of 0.1mm or less and 62 cells/cm², or an open frontal area of 86% or more, or a bulk density of 0.26g/cm³ or less; and partition walls near the outer circumferential wall are deformed mainly at the stage of extrusion forming and damaged easily by pressure from circumference and a thermal shock. Therefore, there is a problem that utility and durability as a part for purifying automobile exhaust gas will be lost.

Japanese Patent Laid-Open No. 57-99340 discloses a ceramic honeycomb structure whose thermal expansion coefficient is increased from the center toward an outside surface. However, if a thermal expansion coefficient of an inside partition wall portion is increased, it has the disadvantage of being damaged even by a weak thermal shock.

In addition, the Japanese Patent Laid-Open No. 57-99340 discloses a method to apply a ceramic material such as silica and alumina on partition walls of a ceramic honeycomb structure. However, according to this method, because a great deal of material which raises a thermal expansion coefficient is applied on partition walls of the outer circumferential portion, the inner diameter of a cell becomes smaller on partition walls of the outer circumferential portion, and a pressure drop increases, too. Therefore, there are problems that a gas flow through partition walls in the outer circumferential portion is remarkably decreased, and the whole catalyst cannot be effectively taken advantage of, thereby purification performance falls.

Incidentally, a general method to carry a catalyst on a ceramic honeycomb structure is a technique where γ-alumina having a large specific surface area is first turned into a water solution to be carried on a ceramic honeycomb structure and a noble metal catalyst is carried on the solution. If a ceramic material such as silica and alumina which raises a thermal expansion coefficient is applied to the partition walls at this time, the more a quantity of the application is, the more the water absorption ratio falls, which cause a problem that a ceramic honeycomb structure cannot carry γ-alumina uniformly, that is, a catalyst cannot be dispersed uniformly.

Further, Japanese Patent Laid-Open No. 56-129044 discloses a ceramic honeycomb structure having a high thermal expansion coefficient in an inside partition wall portion and a small coating thermal expansion of partition walls in an outer circumferential portion. However, a cordierite honeycomb structure in general use at present for automobile exhaust gas purification is produced by taking advantage of a technique to raise thermal shock resistance by making a thermal expansion coefficient as a structure small by orienting a raw material by extrusion forming. Therefore, there is no ceramic material having a smaller thermal expansion coefficient than the cordierite produced through extrusion forming, and the technique cannot be applied to a honeycomb structure whose main material is cordierite.

EP-A-554104 discloses a ceramic honeycomb structure having an outer coating that fills the outer open cells of the honeycomb. The coating material is applied as a paste and dried to reinforce the honeycomb structure.

### Summary of the Invention

The present invention has been made in view of such problems of prior art and aims to provide a ceramic honeycomb structure whose outer circumferential wall is reinforced, which does not hinder a flow of gas in a circumferential partition wall portion of the ceramic honeycomb structure, and whose thermal shock resistance is enhanced profitably.

That is, according to the present invention, there is provided a ceramic honeycomb structure according to claim 1.

In the present invention, it is preferable that a material for the outer circumferential wall of the ceramic honeycomb structure is the same as or different from a material for the ceramic honeycomb structure.

In the present invention, it is preferable that a partition wall of the ceramic honeycomb structure has a thickness of less than 0.1mm and that the ceramic honeycomb structure has 62 cells/cm² or more.

In the present invention, it is preferable that the outer circumferential wall is thicker than an inside partition wall portion of the ceramic honeycomb structure.

In addition, in the present invention, it is preferable that the ceramic honeycomb structure has an open frontal area of 86% or more.

In addition, in the present invention, it is preferable that the ceramic honeycomb structure has a bulk density of 0.26g/cm³ or less.

### Brief Description of the Drawings

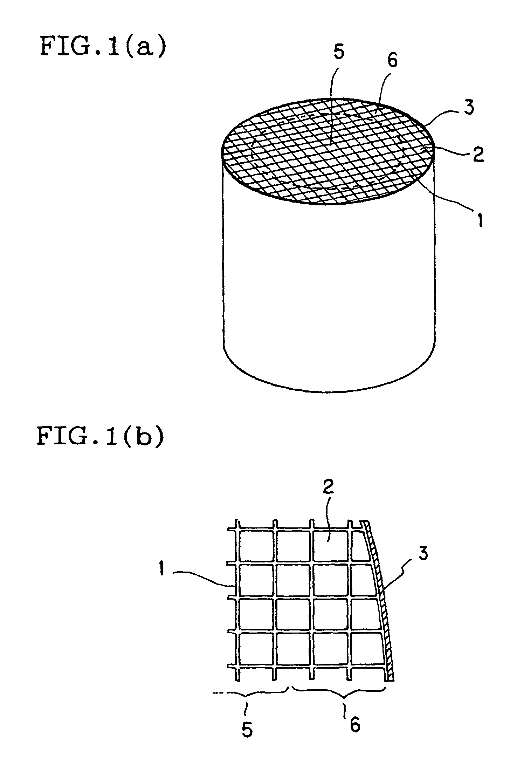

Fig. 1(a)(b) are schematic views describing one embodiment of the ceramic honeycomb structure whose outer circumferential wall was reinforced with a slurried raw material in the present invention, and Fig. 1(a) is a perspective view of the whole, and Fig. 1(b) is an enlarged view around the reinforceed outer circumferential wall.

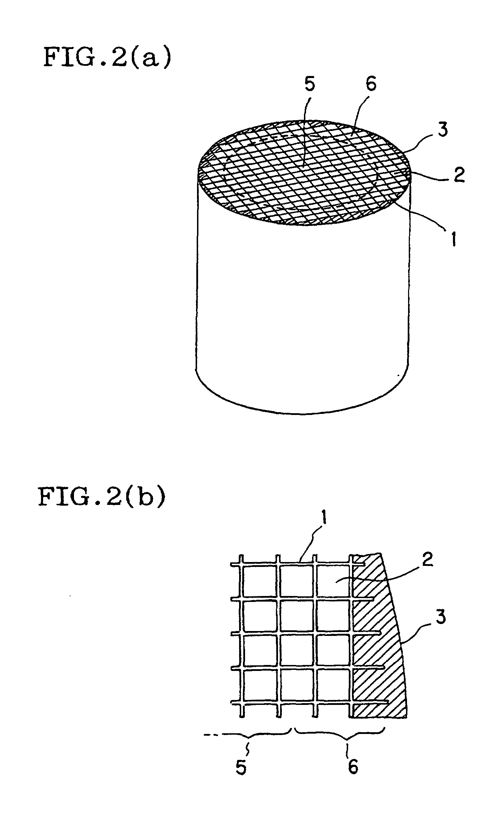

Fig. 2(a)(b) show one embodiment of a ceramic honeycomb structure subjected to a reinforcement process with a slurried raw materials after the outer circumferential portion partition walls and the original outer circumferential wall were ground to be removed in the present invention, and Fig. 2(a) is a perspective diagram of the whole, and Fig. 2(b) is an enlarged view around the reinforced outer circumferential wall.

### Detailed Description of the Invention

The present invention is hereinbelow described in detail based on embodiments shown in the drawing, but the present invention is by no means limited to these embodiments.

Fig. 1(a)(b) are schematic views describing one embodiment of a ceramic honeycomb structure whose outer circumferential wall was reinforced in the present invention, and Fig. 2(a)(b) show one embodiment of a ceramic honeycomb structure whose outer circumferential wall was reinforced after the grinding removal in the present invention. Fig.1(a) and Fig.2(a) are perspective views, and Fig.1(b) and Fig.2(b) are enlarged views around the reinforced outer circumferential wall, respectively.

As Figs. 1(a) and 1(b) show, in the present invention, a ceramic honeycomb structure has a plurality of through-holes (cells) 2 surrounded by partition walls 1. A thermal expansion coefficient in an outer circumferential wall 3 is made larger than that of an inside partition wall portion 5 in a direction of a diameter of the ceramic honeycomb structure. The ceramic honeycomb structure is in the state that stress is applied to the inside partition wall portion 5 from the outer circumferential wall 3.

In a ceramic honeycomb structure having such a constitution, after the ceramic honeycomb structure having a plurality of through-holes (cells 2) surrounded by partition walls 1 is first prepared, a raw material which becomes cordierite when it is fired is slurried and applied to a circumferential portion of the ceramic honeycomb structure to form the outer circumferential wall 3. Subsequently, the ceramic honeycomb structure is fired to make the thermal expansion coefficient of the outer circumferential wall 3 of a ceramic honeycomb structure larger than that of the inside partition wall portion 5 in a direction of a diameter of a ceramic honeycomb structure to put the ceramic honeycomb structure in the state that stress is applied to the inside partition wall portion 5 from the outer circumferential wall 3.

In addition, as shown in Figs. 2(a) and 2(b), after an outer circumferential partition wall portion 6 of a ceramic honeycomb structure having cells 2 partitioned off by partition walls 1 was removed by being ground, a raw material which becomes cordierite when it is fired is slurried and applied to form the outer circumferential wall 3 and fired, thereby a thermal expansion coefficient of the outer circumferential wall 3 of a ceramic honeycomb structure is made larger than that of the inside partition wall portion 5 in a direction of a diameter of the ceramic honeycomb structure to put the ceramic honeycomb structure in the state that stress is applied to the inside partition wall portion 5 from the outer circumferential wall 3.

A basic principle and function of the present invention are described hereinbelow. In the case that a raw material of the cordierite, which is a general raw material for a honeycomb structure, is subjected to extrusion forming to form a honeycomb structure, a kaolin crystal having a hexagonal planar shape is oriented along a face of the partition walls 1 when it passes through a narrow slit. In the later firing step, a cordierite crystal having a hexagonal pillar shape is generated perpendicularly to the kaolin crystal. A thermal expansion coefficient of the cordierite crystallization is different depending on directions, that is, +2.9×10⁻⁶/°C in a direction of a diameter and -1.1×10⁻⁶/°C in a longitudinal direction. Therefore, the honeycomb structure subjected to extrusion forming and fired has a thermal expansion coefficient which is obtained by synthesizing +2.9 and -1.1 (in fact, about 0.6×10⁻⁶/°C) in a direction of a through-hole and a diameter and +2.9×10⁻⁶/°C in a direction of a thickness of a partition wall.

If a raw material which becomes the same cordierite is slurried and applied to the outer circumferential wall 3 of a ceramic honeycomb structure as shown in Fig. 1(a)(b) and Fig. 2(a)(b) and the ceramic honeycomb structure is fired by making use of such a characteristic of a cordierite crystallization, a thermal expansion coefficient of the outer circumferential wall 3 where the slurry was applied is about 2 × 10⁻⁶/°C because kaolin is not oriented in the portion. Further, if this thermal expansion coefficient is about 1×10⁻⁶/°C or more, the thermal expansion coefficient is adjustable by a combination of a raw material which becomes cordierite by being fired and other raw material, and it can be appropriately adjusted from a relation between a cell structure and a thermal expansion coefficient of the inside partition wall portion 5.

Incidentally, a slurried raw material to be applied to form the outer circumferential wall 3 may be a material which becomes cordierite when it is fired, that is the same as a raw material for a ceramic honeycomb structure, or may be another material. That is, it may be appropriately chosen among alumina, silicon nitride, aluminum titanate, mullite, and materials which become these when they are fired, and a slurried material may be prepared by combining these. Therefore, a thermal expansion coefficient of the outer circumferential wall 3 can be adjusted in a moderate value from the relation with a thermal expansion coefficient of the inside partition wall portion 5.

In the stage of subjecting a raw material of cordierite to extrusion forming in order to give a honeycomb shape, raw material particles are merely placed in line. However, when temperature rises and reaches a firing temperature, cordierite is generated, and crystals melt to be united. In the later cooling process, the outer circumferential wall 3 having a large thermal expansion coefficient is in the state that it shrinks more than the inside partition wall portion 5 having a small thermal expansion coefficient. That is, the ceramic honeycomb structure of the present invention is in the state that a compression effect can be obtained from outside.

In addition, cordierite is preferably applied as a material constituting a ceramic honeycomb structure in view of its low thermal expansion property as described above. However, it is not limited to cordierite, and another raw material such as alumina may be employed depending on its use.

When hot exhaust gas is suddenly sent in an automobile exhaust gas purification apparatus in which a ceramic honeycomb structure is arranged, a difference in temperature between in a central portion and in an outer circumferential portion is generated, and a thermal shock is applied to the ceramic honeycomb structure. The central portion of the ceramic honeycomb structure becomes hot and is going to expand at this time. However, it cannot expand because the outer circumferential portion is at normal temperature. Therefore, internal pressure is applied, and a tensile load is applied to the outer wall. Generally, ceramics is relatively weak against a tensile load though it is strong against compression load. Therefore, in the case that a tensile load in an outer circumferential portion due to temperature distribution exceeds rupture strength of a ceramic honeycomb structure, the ceramic honeycomb structure is ruptured. To the contrary, in the ceramic honeycomb structure where the outer circumferential wall 3 is subjected to the specific reinforcement of the present invention, a thermal expansion coefficient of the outer circumferential wall 3 is larger than that of the inside partition wall portion 5 in a direction of a diameter. In other words, the outer circumferential wall 3 is in a compressed state, and stress is applied toward the inside partition wall portion 5. That is, since a tensile load is not applied until a tensile load larger than this stress is applied, the outer circumferential wall 3 in a compressed state like the present invention have a weaker outbreak tensile load in comparison with an outer circumferential wall of a normal ceramic honeycomb structure, thereby thermal shock resistance is increased, and rupture is hard to be caused.

Further, the present invention can be preferably applied to a ceramic honeycomb structure having thin walls, which has a thickness of a partition wall of 0.1mm or less and 62 cells/cm² or more, or an open frontal area of 86% or more, or a bulk density of 0.26g/cm³. In addition, when a ceramic honeycomb structure having such thin walls is produced, deformation of a partition wall near the outer circumferential wall is often caused. However, in such a deformed ceramic honeycomb structure, the outer circumferential portion having excellent thermal shock resistance can be newly formed by grinding and removing a deformed portion. By this, it is possible to produce a ceramic honeycomb structure having a large surface area per unit volume and a strength by which the structure can stand practical use and to anticipate improvement of production yield.

### [Examples]

A specific result of operation of the present invention is hereinbelow described.

### (Examples 1 - 5, Comparative Examples 1 - 10)

A raw material which becomes cordierite when it is fired was subjected to extrusion forming and fired to produce 30 cordierite honeycomb structures each having an outer diameter of 106mm, a full length of 114mm, a thickness of partition walls as shown in Table 1 (sample No. 1 - 7), 62 cells/cm², and a thickness of the outer circumferential wall of 0.25mm in each kind. Ten out of these cordierite honeycomb structures in each kind of samples were taken out. The same raw material was slurried as shown in Figs. 1(a) and 1(b) and applied on the outer circumferential wall to have a thickness of about 1.25mm. Then, the cordierite honeycomb structures were fired to give Examples 1 to 5. Other ten cordierite honeycomb structures were not processed at all for Comparative Examples 1 to 5. As for the other ten, in accordance with a method disclosed in Japanese Patent Laid-Open No. 57-99340, a solution including 10% by weight of α-alumina was passed through a portion having a thickness of 30mm from the outer circumferential wall, surplus liquid was blown off with compressed air to dry the structures, the solution was passed through a portion having a thickness of 15mm from the outer circumferential wall, and they were dried and fired to give Comparative Examples 6 to 10.

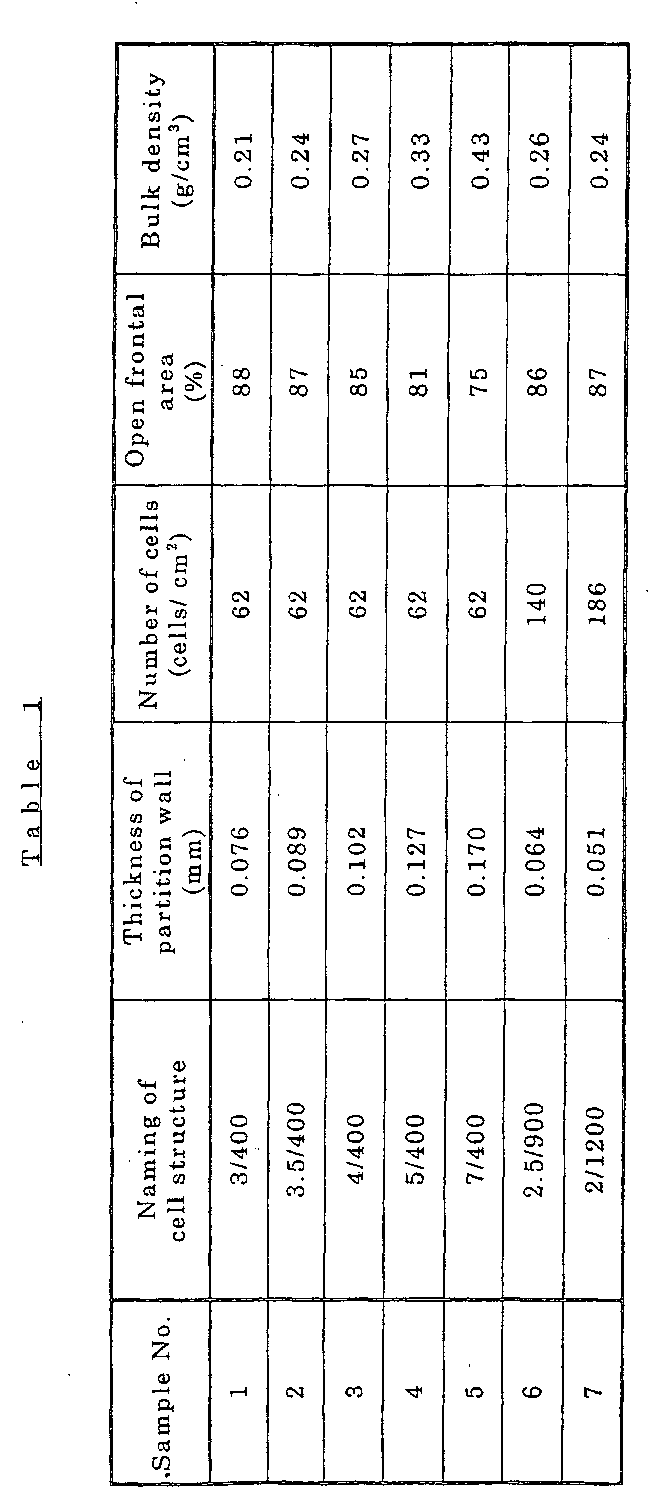

A ceramic mat was wound up around the outer circumference of each of three kinds of the above cordierite honeycomb structures, each of which was pressed in a can, and a cone was attached to the can to produce a converter. Combustion gas of propane gas was sent into the converter, and a thermal shock test was conducted. The temperature of the combustion gas was 800°C at a position of the 10mm front from the honeycomb front face. The gas was sent with a gas flow rate of 3Nm³/min for five minutes before air at room temperature was sent for five minutes, which was regarded as 1 cycle, and each honeycomb structure was taken out after 10 cycles to check presence or absence of a crack. When no crack was found, temperature of 50°C combustion gas was raised, and the above operation was repeated in the same manner till a crack occurs. Five of each kind were tested. The results are shown in Table 2. In addition, samples of 50mm long was cut off in a right-angled triangle section of 3.5mm and in a 3.5mm square section from a central portion so that the outer circumferential wall may become an oblique side. Two of each kind of samples were measured for thermal expansion coefficient. The results are shown in Table 2.

Incidentally, prior to the thermal shock test, the tip of the corn of each converter was connected to a blower to send air at room temperature at the rate of 6 m³/min., and a difference in pressure (a pressure drop) between in front and at the back of the honeycomb structure was measured. The results are shown in Table 2. Since Comparative Examples 1 to 5 has completely the same honeycomb portion as Examples 1 to 5 and, therefore, has the same pressure drop at this time, the test was omitted except for the sample No. 1 (cell structure naming: 3/400).

In addition, about the sample No. 2 (naming of cell structure : 3.5/400), a sample carrying 0.2g/cm³ of γ-alumina was prepared after the model of a catalyst, and the sample was attached to a converter. Air at room temperature was sent to the converter at a rate of 3 m³/min. A flow speed in a fine portion was measured at a 10mm-backward position from an exit end face of the honeycomb structure. The results are shown in Table 3. In the measurement, a hot-wire anemometer of a resistance-exothermic type having a width of the tip of a probe of about 3mm was used.

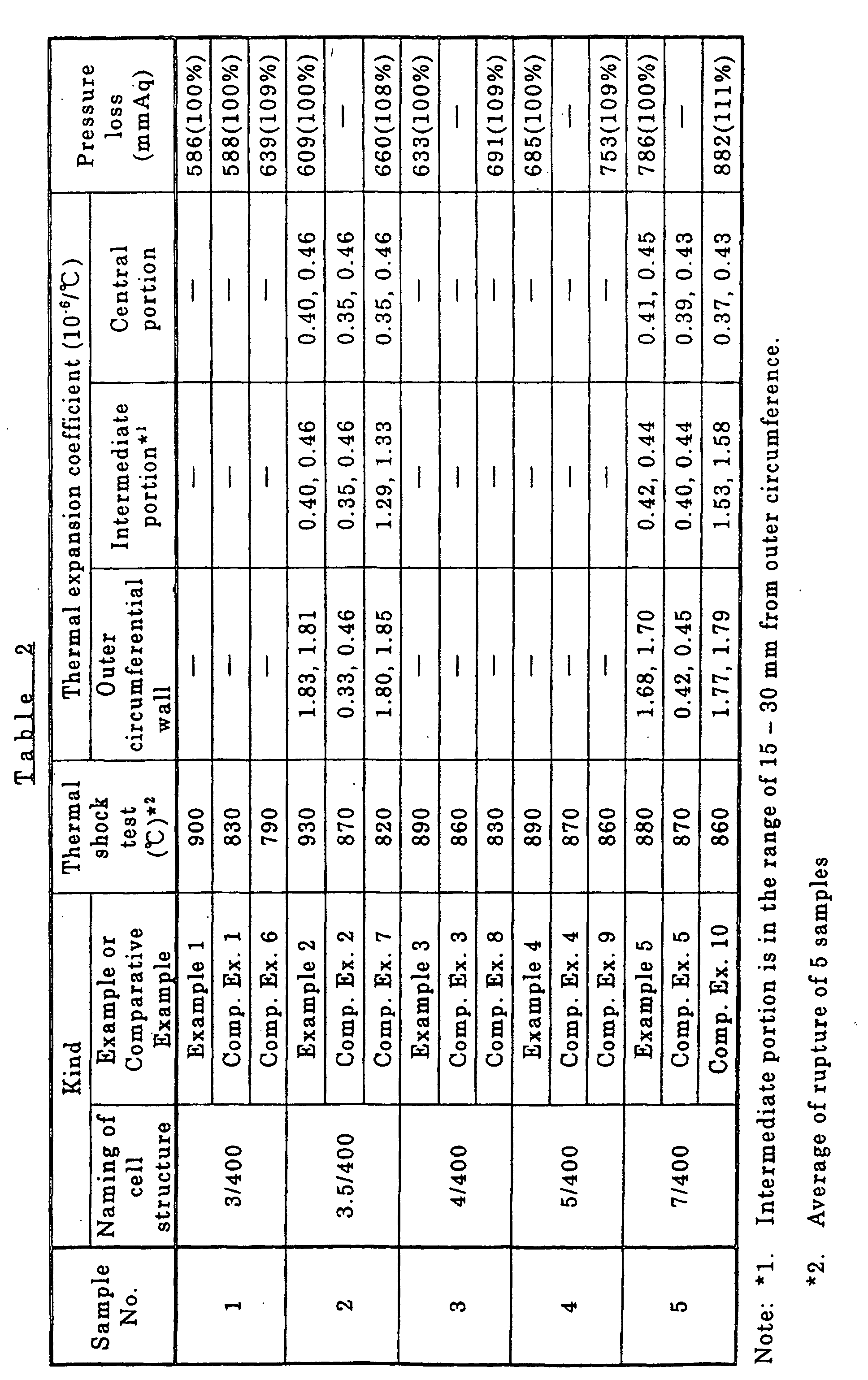

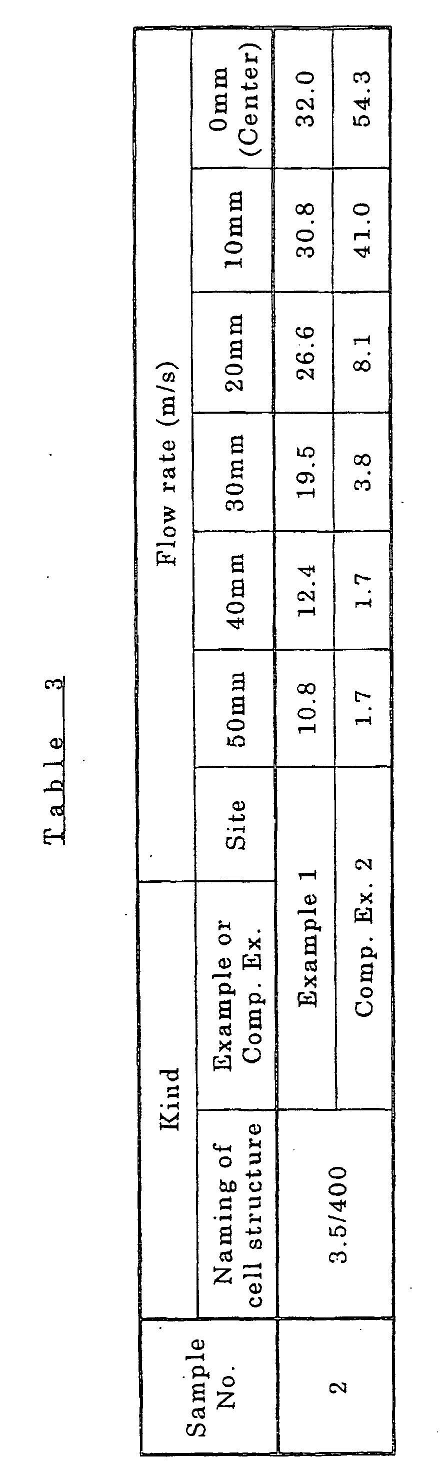

### (Example 6, Comparative Example 11)

The same raw material which becomes cordierite when it is fired was subjected to forming and fired to obtain 20 cordierite honeycomb structures, each having a full length of 114mm, a thickness of a partition wall of 0.05mm, and 186 cells/cm². Ten among them were ground by a grinder having a diamond grinding stone so that the outer diameter of 118mm after firing was reduced up to the outer diameter of 105mm. The same raw material was slurried and applied to the cordierite honeycomb structures to form the outer circumferential wall as shown in Figs. 2(a) and 2(b). The cordierite honeycomb structures were fired again to give "Example 6" having an outer diameter of 106mm. A thickness of the outer circumferential wall at this time was not uniform, a reason of which is that the outer circumferential portion partition wall after being ground has a form of the teeth of a comb, and the average was about 1.7mm. The other ten were employed as "Comparative Example 11". At this time, the outer diameter was 106mm, and the thickness of the outer circumferential wall was 0.2mm. Seven of each kind were subjected to the aforementioned thermal shock test and measured for thermal expansion coefficient. The results are shown in table 4.

**Table 4**

| | Thermal shock test (°C) | | Thermal expansion coefficient (10⁻⁶/°C) | |
|---|---|---|---|---|
| Kind | Average of rupture | Range | Outer circumferential wall portion | Central Portion |
| Example 6 | 880 | 850 - 900 | 1.60, 1.67 | 0.38, 0.44 |
| Comp. Ex. 11 | 810 | 750 - 850 | 0.35, 0.41 | 0.35, 0.43 |

In addition, an aluminum board is abutted against an individual end face of two kinds of the aforementioned cordierite honeycomb structures of Example 6 and Comparative Example 11 by means of an urethane sheet having a thickness of about 0.5mm, and the side was wrapped in a tube having a thickness of about 0.5mm to be sealed up. They were put in a hydraulic container, and water pressure was raised by degrees till a sound of rupture could be heard to rupture the samples. Pressures at this time are shown in Table 5. Incidentally, the number of the tested samples is three in each Example. [0037]

**Table 5**

| | External pressure strength test (MPa) | |
|---|---|---|
| Kind | Average of rupture | Range |
| Example 6 | 1.21 | 1.03 - 1.52 |
| Comp. Ex. 11 | 0.55 | 0.45 - 0.62 |

### (Study)

As is apparent from the above results, any Example of the present invention showed a dominant value in the thermal shock test and an external pressure strength test in comparison with Comparative Examples, and a superior effect of the present invention could be confirmed.

As discussed above, in the ceramic honeycomb structure whose outer circumferential wall was subjected to a specific reinforcement of the present invention, a pressure drop is not increased, a flow of gas is not abnormally concentrated in the center, and thermal shock resistance is improved. In addition, about the ceramic honeycomb structure having a thin partition wall and a wide surface area per unit volume, a product having excellent thermal shock resistance can be provided likewise, which is useful when it is used for an automobile exhaust gas purification apparatus, or the like, having relatively severe use conditions.

## Claims

1. A ceramic honeycomb structure comprising a plurality of through-holes (2) surrounded by partition walls (1), **characterised by** having an outer circumferential wall obtainable by firing a layer of a raw material applied to a circumference of the honeycomb structure, wherein the thermal expansion coefficient of the outer circumferential wall (3) of the ceramic honeycomb structure is larger than the thermal expansion coefficient in the direction of a diameter of an inside partition wall portion (5) in the ceramic honeycomb structure so that, when the structure is cooled from the firing temperature, compression is applied to said inside partition wall portion from said outer circumferential wall.

2. A ceramic honeycomb structure as defined in claim 1, wherein the material of the outer circumferential wall (3) of the ceramic honeycomb structure is the same as or different from the material of the inside partition wall portion (5).

3. A ceramic honeycomb structure as defined in claim 1 or 2, wherein the partition walls of the ceramic honeycomb structure have a thickness of less than 0.1 mm.

4. A ceramic honeycomb structure as defined in claim 1, 2 or 3, wherein the ceramic honeycomb structure has a cell density of the through-holes of 62 cells/cm² or more.

5. A ceramic honeycomb structure as defined in any one of claims 1 to 4, wherein the outer circumferential wall (3) is thicker than an inside partition wall potion of the ceramic honeycomb structure.

6. A ceramic honeycomb structure as defined in any one of claims 1 to 5, wherein the ceramic honeycomb structure has an open frontal area of 86% or more.

7. A ceramic honeycomb structure as defined in any one of claims 1 to 6, wherein the ceramic honeycomb structure has a bulk density of 0.26g/cm³ or less.

8. A method of making a ceramic honeycomb structure as claimed in any one of claims 1 to 7, including the steps of:
(i) preparing a ceramic honeycomb structure having a plurality of through-holes (2) surrounded by partition walls (1);
(ii) slurrying and applying a raw material to a circumferential portion of the ceramic honeycomb structure to form an outer circumferential wall (3), said raw material being one which, after firing in step (iii) below, has a larger coefficient of thermal expansion than said ceramic honeycomb structure;
(iii) firing the ceramic honeycomb structure to make the thermal expansion coefficient of the outer circumferential wall larger than that of the inside partition wall portion (5) of the ceramic honeycomb structure; and
cooling the ceramic honeycomb structure to apply compression to the inside partition wall portion from the outer circumferential wall.

9. A method according to claim 8 further including the step of:
before said step of slurrying and applying a raw material,
removing by grinding an outer circumferential partition wall (6) of the ceramic honeycomb structure.

10. A method according to claim 8 or 9, wherein said ceramic honeycomb structure is of cordierite and is prepared by extrusion and firing.

11. A method according to claim 10, wherein the raw material applied in step (ii) is one which becomes cordierite on firing.

## Patentansprüche

1. Keramische Wabenstruktur, umfassend eine Vielzahl an Durchgangslöchern (2), die von Trennwänden umgeben (1) sind, **dadurch gekennzeichnet, dass** sie eine äußere Umfangswand aufweist, die durch Brennen eines auf den Umfang der Wabenstruktur aufgetragenen Rohmaterials erhalten werden kann, worin der Wärmeausdehnungskoeffizient der äußeren Umfangswand (3) der keramischen Wabenstruktur größer als der Wärmeausdehnungskoeffizient in die Richtung des Durchmessers eines inneren Trennwandabschnitts (5) in der keramischen Wabenstruktur ist, sodass beim Abkühlen der Struktur von der Brenntemperatur von der äußeren Umfangswand ein Kompressionsdruck auf den inneren Trennwandabschnitt ausgeübt wird.

2. Keramische Wabenstruktur nach Anspruch 1, worin das Material der äußeren Umfangswand (3) der keramischen Wabenstruktur dasselbe oder ein anderes Material wie das des inneren Trennwandabschnitts (5) ist.

3. Keramische Wabenstruktur nach Anspruch 1 oder 2, worin die Trennwände der keramischen Wabenstruktur eine Dicke von weniger als 0,1 mm aufweisen.

4. Keramische Wabenstruktur nach Anspruch 1, 2 oder 3, worin die keramische Wabenstruktur eine Zellendichte der Durchgangslöcher von 62 Zellen pro cm² oder höher aufweist.

5. Keramische Wabenstruktur nach einem der Ansprüche 1 bis 4, worin die äußere Umfangswand (3) dicker als der innere Trennwandabschnitt der keramischen Wabenstruktur ist.

6. Keramische Wabenstruktur nach einem der Ansprüche 1 bis 5, worin die keramische Wabenstruktur einen offenen Stirnbereich von 86 % oder mehr aufweist.

7. Keramische Wabenstruktur nach einem der Ansprüche 1 bis 6, worin die keramische Wabenstruktur eine Rohdichte von 0,26 g/cm² oder weniger aufweist.

8. Verfahren zur Herstellung einer keramischen Wabenstruktur nach einem der Ansprüche 1 bis 7, umfassend die Schritte:
(i) des Herstellens einer keramische Wabenstruktur mit einer Vielzahl an Durchgangslöchern (2), die von Trennwänden (1) umgeben sind;
(ii) des Aufschlämmens und Auftragens eines Rohmaterials auf einen Umfangsabschnitt der keramischen Wabenstruktur zur Bildung einer äußeren Umfangswand (3), wobei das Rohmaterial ein solches ist, das nach dem folgenden Schritt des Brennens (iii) einen größeren Wärmeausdehnungskoeffizienten als die keramische Wabenstruktur aufweist;
(iii) des Brennens der keramischen Wabenstruktur, damit der Wärmeausdehnungskoeffizient der äußeren Umfangswand größer als der des inneren Trennwandabschnitts (5) der keramischen Wabenstruktur wird; und
des Abkühlens der keramischen Wabenstruktur, um von der äußeren Umfangswand einen Kompressionsdruck an den inneren Trennwandabschnitt auszuüben.

9. Verfahren nach Anspruch 8, weiters umfassend den Schritt des:
Entfernens einer äußeren Umfangswand (6) der keramischen Wabenstruktur durch Schleifen
vor dem Schritt des Aufschlämmens und Auftragens eines Rohmaterials.

10. Verfahren nach Anspruch 8 oder 9, worin die keramische Wabenstruktur aus Cordierit ist und durch Extrudieren oder Brennen hergestellt ist.

11. Verfahren nach Anspruch 10, worin das in Schritt (ii) aufgetragene Rohmaterial eines ist, das beim Brennen zu Cordierit wird.

## Revendications

1. Structure céramique en nid d'abeilles comprenant plusieurs trous traversants (2) entourés par des parois de séparation (1), **caractérisée en ce qu'**elle présente une paroi circonférentielle externe pouvant être obtenue par la cuisson d'une couche d'un matériau brut appliqué à une circonférence de la structure en nid d'abeilles, où le coefficient de dilatation thermique de la paroi circonférentielle externe (3) de la structure céramique en nid d'abeilles est plus grand que le coefficient de dilatation thermique dans la direction d'un diamètre d'une portion de paroi de séparation intérieure (5) dans la structure céramique en nid d'abeilles de telle sorte que, lorsque la structure est refroidie à partir de la température de cuisson, une compression est appliquée à ladite portion de paroi de séparation interne depuis ladite paroi circonférentielle externe.

2. Structure céramique en nid d'abeilles selon la revendication 1, où le matériau de la paroi circonférentielle externe (3) de la structure céramique en nid d'abeilles est le même que ou diffère du matériau de la portion de paroi de séparation interne (5).

3. Structure céramique en nid d'abeilles selon la revendication 1 ou 2, où les parois de séparation de la structure céramique en nid d'abeilles ont une épaisseur inférieure à 0,1mm.

4. Structure céramique en nid d'abeilles selon la revendication 1, 2 ou 3, où la structure céramique en nid d'abeilles présente une densité d'alvéoles des trous traversants de 62 alvéoles/cm² ou plus.

5. Structure céramique en nid d'abeilles selon l'une des revendications 1 à 4, où la paroi circonférentielle externe (3) est plus épaisse qu'une portion de paroi de séparation interne de la structure céramique en nid d'abeilles.

6. Structure céramique en nid d'abeilles selon l'une des revendications 1 à 5, où la structure céramique en nid d'abeilles présente une zone frontale ouverte de 86% ou plus.

7. Structure céramique en nid d'abeilles selon l'une des revendications 1 à 6, où la structure céramique en nid d'abeilles possède une masse volumique en vrac de 0,26g/cm³ ou moins.

8. Procédé de fabrication d'une structure céramique en nid d'abeilles selon l'une des revendications 1 à 7, comprenant les étapes consistant à:
(i) préparer une structure céramique en nid d'abeilles possédant une pluralité de trous traversants (2) entourés par des parois de séparation (1);
(ii) préparer une boue à partir de et appliquer un matériau brut à une portion circonférentielle de la structure céramique en nid d'abeilles pour former une paroi circonférentielle externe (3), ledit matériau brut étant un matériau qui, après la cuisson à l'étape (iii) ci-dessous, possède un plus grand coefficient de dilatation thermique que ladite structure céramique en nid d'abeilles;
(iii) cuire la structure céramique en nid d'abeilles pour amener le coefficient de dilatation thermique de la paroi circonférentielle externe à être plus grand que celui de la portion de paroi de séparation interne (5) de la structure céramique en nid d'abeilles; et
refroidir la structure céramique en nid d'abeilles afin d'appliquer une compression à la portion de paroi de séparation interne depuis la paroi circonférentielle externe.

9. Procédé selon la revendication 8, comprenant en outre l'étape consistant à:
avant ladite étape de préparation de boue et d'application d'un matériau brut
retirer par meulage une paroi de séparation circonférentielle externe (6) de la structure céramique en nid d'abeilles.

10. Procédé selon la revendication 8 ou 9, où ladite structure céramique en nid d'abeilles est en cordiérite et est préparée par extrusion et cuisson.

11. Procédé selon la revendication 10, où le matériau brut appliqué à l'étape (ii) est un matériau qui devient de la cordiérite lors de la cuisson.
